# EUROPEAN PATENT APPLICATION

(11) **EP 3 799 505 A1**
(43) Date of publication of application: **31.03.2021**
(21) Application number: 18920069.4
(22) Date of filing: 21.05.2018
(51) Int. Cl.: H04W 72/12, H04W 72/04, H04W 74/08

(54) **TRANSMISSION DEVICE AND RECEIVING DEVICE**

(71) Applicant: NTT DOCOMO, INC., Chiyoda-ku Tokyo 100-6150 (JP)
(72) Inventor: TAKEDA, Kazuki, Tokyo 100-6150 (JP); NAGATA, Satoshi, Tokyo 100-6150 (JP); WANG, Lihui, Beijing 100190 (CN); HOU, Xiaolin, Beijing 100190 (CN)
(74) Representative: Hoffmann Eitle
(86) International application number: PCT/JP2018/019507
(87) International publication number: WO 2019/224876

(57) **Abstract**

A transmitting device includes a transmitting section configured to transmit a signal in a random access procedure, and a control section configured to control repetitions for a message including one of data using data mapping type B and a HARQ (Hybrid Automatic Repeat reQuest) feedback.

## Description

### Technical Field

The present invention relates to a transmitting device and a receiving device in a next-generation mobile communication system.

### Background Art

In the UMTS (Universal Mobile Telecommunications System) network, the specifications of long-term evolution (LTE) have been drafted for the purpose of further increasing high speed data rates, providing lower delays and so on (see Non-Patent Literature 1). In addition, the specifications of LTE-A (LTE Advanced, LTE Rel. 10, 11, 12, 13) have been drafted for the purpose of further increasing the capacity and sophistication of LTE (LTE Rel. 8, 9).

Successor systems of LTE (for example, FRA (Future Radio Access), 5G (5th generation mobile communication system), 5G+ (plus), NR (New Radio), NX (New radio access), FX (Future generation radio access), LTE Rel. 14 or 15 or later versions) are also under study.

In the existing LTE systems (for example, LTE Rel. 8 to 13), downlink (DL) and/or uplink (UL) communications are performed using 1-ms subframes (also referred to as "transmission time intervals (TTIs)" and the like). Such a subframe is a unit of time of transmitting one channel-encoded data packet, and serves as a unit of processing in, for example, scheduling, link adaptation, retransmission control (HARQ (Hybrid Automatic Repeat reQuest)), and the like.

Furthermore, a radio base station (eNB (eNode B) for example) controls data assignment (scheduling) to a user terminal (UE (User Equipment)), and notifies the UE of a data scheduling instruction by using DCI (Downlink Control Information). For example, upon receiving DCI (also referred to as UL grant) instructing UL transmission, a UE supporting existing LTE (e.g., LTE Rel. 8 to 13) transmits UL data in a subframe that is later than the reception by a given period (4 ms, for example).

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April, 2010

### Summary of Invention

### Technical Problem

For securing coverage in future wireless communication systems (e.g., NR), application of repetition (repeated transmission) is also under study.

What kind of the repetition is to be applied to what kind of communications has not been fully studied yet. When the repetition fails to be appropriately performed, communication throughput and/or communication quality might be compromised.

In view of this, one object of the present disclosure is to provide a transmitting device and a receiving device that can appropriately implement repetition.

### Solution to Problem

A transmitting device according to an aspect of the present invention includes a transmitting section configured to transmit a signal in a random access procedure, and a control section configured to control repetitions for a message including one of data using data mapping type B and a HARQ (Hybrid Automatic Repeat reQuest) feedback.

### Advantageous Effects of Invention

With the present invention, repetition can be appropriately implemented.

### Brief Description of Drawings

Fig. 1 is a diagram showing an example of a PUSCH resource assignment table.
Fig. 2 is a diagram showing an example of a method of determining a parameter j for resource assignment.
Fig. 3 is a diagram showing an example of a random access procedure.
Fig. 4 is a diagram showing an example of repetition according to Mode 1-1.
Fig. 5 is a diagram showing an example of repetition according to Mode 1-2.
Fig. 6 is a diagram showing an example of repetition according to Mode 1-3.
Fig. 7 is a diagram showing an example of a schematic structure of a radio communication system according to one embodiment of the present invention.
Fig. 8 is a diagram showing an example of an overall configuration of a radio base station according to one embodiment of the present invention.
Fig. 9 is a diagram showing an example of a functional configuration of the radio base station according to the embodiment of the present invention.
Fig. 10 is a diagram showing an example of an overall configuration of a user terminal according to one embodiment of the present invention.
Fig. 11 is a diagram showing an example of a functional configuration of the user terminal according to the embodiment of the present invention.
Fig. 12 is a diagram showing an example of a hardware structure of the radio base station and the user terminal according to the embodiment of the present invention.

### Description of Embodiments

### <Slot-based scheduling and mini-slot-based scheduling>

Transmission of data and the like using slot-based scheduling and mini-slot-based scheduling has been under study, for future wireless communication systems (for example, LTE Rel. 14, 15 and later versions, 5G, NR, etc.; hereinafter also referred to as NR).

A slot is one of basic transmission units, and one slot is comprised of a given number of symbols. For example, in the normal CP, a slot period is comprised of a first number of symbols (for example, 14 symbols), and in an extended CP, a slot period is comprised of a second number of symbols (for example, 12 symbols).

The mini-slot corresponds to a period comprised of equal to or less than a given number of symbols (for example, 14 symbols (or 12 symbols)). As an example, in DL transmission (for example, PDSCH transmission), the mini-slot may be comprised of a given number of symbols (for example, the number of symbols is two, four, or seven).

The slot-based scheduling (PDSCH mapping type A) and the mini-slot-based scheduling (PDSCH mapping type B) may be configured to be different from each other in a resource assignment method applied.

It is assumed that the slot-based scheduling (also referred to as PDSCH mapping type A) is applied to DL (for example, PDSCH transmission). In this case, the PDSCH top position in a slot is selected from preset candidate symbols, and the number of symbols to which the PDSCH is assigned (a PDSCH length) is selected from the range from a given value (X) to 14. The candidate symbols that are candidates for the top position correspond to, for example, given symbol indices (for example, #0, #1, #2, #3) in a slot. For example, X is three.

It is assumed that the mini-slot-based scheduling (also referred to as PDSCH mapping type B) is applied to DL (for example, PDSCH transmission). In this case, the number of symbols to which the PDSCH is assigned (PDSCH length) is selected from the preset number of candidate symbols, and the PDSCH top position in a slot is set to any location (symbol) in the slot. The number of PDSCH length candidate symbols corresponds to, for example, a given number (two, four, or seven symbols). Thus, the PDSCH top position is flexibly set.

It is assumed that the slot-based scheduling (also referred to as PUSCH mapping type A) is applied to UL (for example, PUSCH transmission). In this case, the PDSCH top position in a slot is selected from preset candidate symbols (for example, given symbol index #0), and the number of symbols to which the PDSCH is assigned (PDSCH length) is selected from the range from a given value (Y) to 14. For example, Y is four.

It is assumed that mini-slot-based scheduling (also referred to as PUSCH mapping type B) is applied to UL (for example, PUSCH transmission). In this case, the number of symbols to which the PDSCH is assigned (PDSCH length) is selected from the preset number of candidate symbols (one to fourteen symbols), and the PDSCH top position in a slot is set to any location (symbol) in the slot. Thus, the PDSCH top position is flexibly set.

As described above, the mini-slot-based scheduling may be PDSCH and/or PUSCH transmission configured with two, four, or seven symbols, with the start symbol position flexibly settable. On the other hand, the PDSCH without the mini-slot-based scheduling may be a PDSCH having a given symbol length or more, with the start symbol position being the 0th to 3rd symbols in the slot. The PUSCH without the mini-slot-based scheduling may be a PUSCH having a given symbol length or more, with the start symbol position being the 0th symbol in the slot.

The PDSCH and PUSCH without the mini-slot-based scheduling may be referred to as PDSCH/PUSCH mapping type A, and the PDSCH and PUSCH with the mini-slot-based scheduling may be referred to as PDSCH/PUSCH mapping type B. Furthermore, DMRS may be inserted at different positions depending on the PDSCH/PUSCH mapping type. Furthermore, which of the mapping types is applied for the PDSCH/PUSCH may be configured by higher layer signaling (RRC signaling for example), may be notified using DCI, or may be recognized using the combination of these.

The PDSCH mapping type A and PUSCH mapping type A may be referred to as data mapping type A. The PDSCH mapping type B and the PUSCH mapping type B may be referred to as data mapping type B.

Furthermore, application of repetition to data transmission in NR has been under study. For example, the radio base station (network (NW), gNB) repeatedly transmits DL data (for example, downlink shared channel (PDSCH)) for a given number of times. Alternatively, the UE repeatedly transmits UL data (for example, uplink shared channel (PUSCH)) for a given number of times.

When the slot-based scheduling is applied, repetition (inter-slot repetition) may be performed with data assigned to each of a plurality of slots. With the slot-based scheduling, data assignment is controlled on a slot-by-slot basis (within each slot), meaning that the data is assigned without crossing a slot-boundary.

On the other hand, when mini-slot-based scheduling is applied, repetition for data is implemented in units of a given number of symbols. This means that there may be a case where one of a plurality of data repetitions (data assignment) crosses a slot-boundary depending on the number of repetition (such as K, repK, or repetition factor), the unit of data assignment (the data length of each repetition), the period during which the repetition is applied, and the like.

### <Dynamic grant-based transmission and configured grant-based transmission (type 1, type 2)>

In NR, in order to achieve low-latency communication, application of configured grant-based transmission of transmitting UL data based on UL grant (configured grant, configured UL grant, for example) configured by a higher layer has been under study, in addition to dynamic grant-based transmission (DG transmission) of transmitting a UL signal (PUSCH for example) based on a dynamic UL grant (dynamic grant). Each of the dynamic grant and the configured grant may be referred to as actual UL grant.

The dynamic grant-based transmission may be referred to as dynamic grant-based PUSCH (Physical Uplink Shared Channel), UL Transmission with dynamic grant, PUSCH with dynamic grant, UL Transmission with UL grant, UL grant-based transmission, or UL transmission scheduled by dynamic grant (transmission resource configured).

The configured grant-based transmission may be referred to as configured grant-based PUSCH, UL Transmission with configured grant, PUSCH with configured grant, UL Transmission without UL grant, UL grant-free transmission, or UL transmission scheduled by configured grant (transmission resource configured). Furthermore, the configured grant-based transmission may be defined as one type of UL Semi-Persistent Scheduling (SPS).

Several types (such as type 1 and type 2) are under study for control of configured grant-based transmission.

With the configured grant type 1 transmission, the parameters used for the configured grant-based transmission (which may also be referred to as configured grant-based transmission parameters, configured grant parameters, or the like) are configured for the UE only using higher layer signaling. The configured grant parameters may include information identifying the configured grant resource, for example. The configured grant parameters may include, for example, periodicity. Further, even when configured grant-based transmission is configured, the UE may skip the configured grant-based transmission if there is no data in the transmission buffer.

With the configured grant type 2 transmission, the parameters used for the configured grant-based transmission are configured for the UE using higher layer signaling. The configured grant parameters may include, for example, periodicity. As in the case of the SPS in existing LTE, the UE can determine whether to perform transmission using a resource for the configured grant-based transmission (which may also be referred to as configured grant resource or the like) based on a given activation/deactivation signal. Even when the configured grant-based transmission is activated, the UE may skip the configured grant-based transmission if there is no data in the transmission buffer. DCI (activation signaling) may activate (trigger) PUSCH configured by SPS (Semi-Persistent Scheduling), and the PUSCH may be released or deactivated by DCI (deactivation signaling) or when a given period of time (timer) elapses.

In DL or UL transmission with the configured grant-based transmission, transmission over a plurality of slots or a plurality of mini-slots may be TB repetitions (K repetitions). These repetitions may be performed according to an RV (Redundancy Version) sequence.

### <Resource assignment for PUSCH transmission>

For PUSCH transmission, information in a resource assignment table indicating a plurality of candidates for resource (time domain resource) assignment may be used. DCI in USS (UE-specified Search Space) used for scheduling PUSCH transmission may include a field (for example, Time domain resource assignment field) designating one of the candidates in the resource assignment table.

The UE provided with the resource assignment table by higher layer signaling (specified RRC signaling for example) may use this table for PUSCH transmissions scheduled by DCI in USS. The UE provided with the resource assignment table by RMSI (Remaining Minimum System Information, system information) may use this table for PUSCH transmissions scheduled by DCI in USS. The UE not provided with the resource assignment table by any of higher layer signaling and RMSI may use a default resource assignment table for PUSCH transmissions scheduled by DCI in USS.

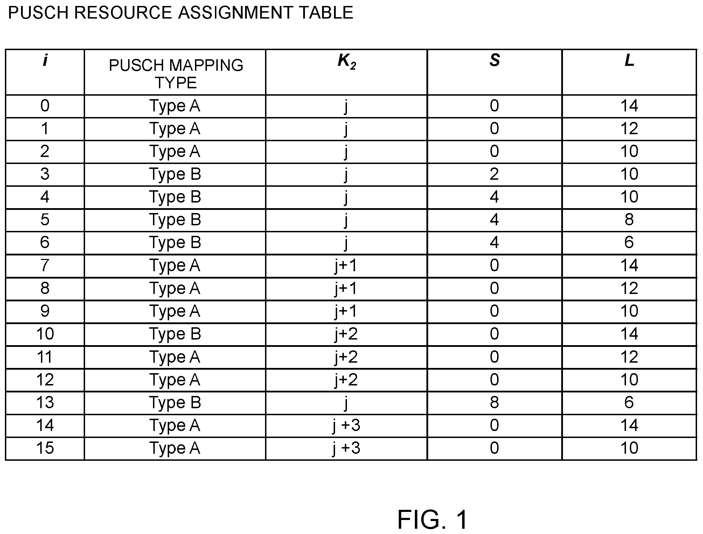

Fig. 1 shows an example of a default resource assignment table as an example of a PUSCH resource assignment table. The PUSCH resource assignment table has a plurality of entries. Each entry may include a candidate index i to be designated by DCI, a PUSCH mapping type, a slot offset K₂ from DCI to the PUSCH for PUSCH scheduling, a start symbol S, and a length L [symbol].

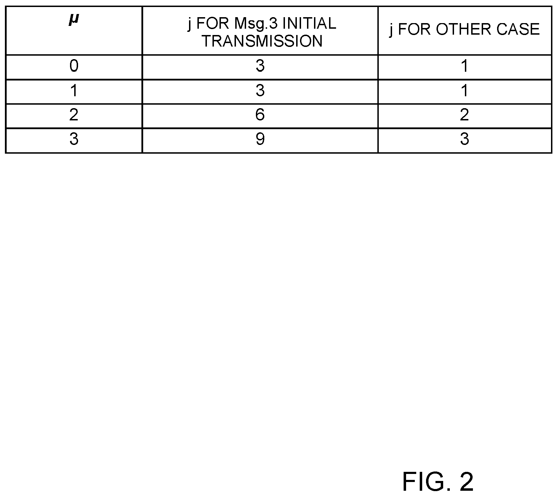

The slot offset K₂ may be based on j. For example, K₂ may be expressed as j, j+1, j+2, j+3, and so on. As illustrated in Fig. 2, j may be based on µ corresponding to the subcarrier spacing (SCS) and on whether or not the PUSCH transmission is the initial transmission. Here, SCS is expressed as 2^{µ}·15 kHz.

### <Random access procedure>

Implementation of initial access based on a synchronization signal block (SS (Synchronization Signal) block) transmitted from a cell in the future radio communication systems is under study. The SS block may also be referred to as SSB or SS/PBCH (Physical Broadcast Channel) block.

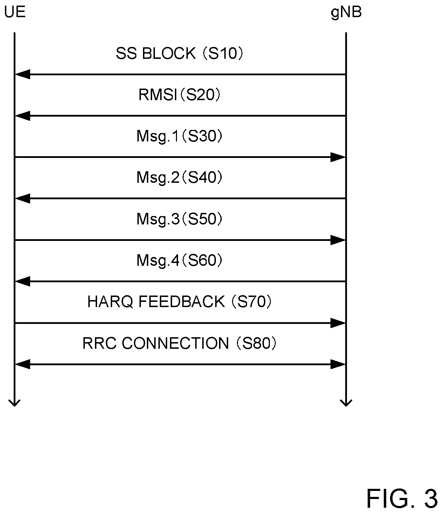

The UE may perform the random access procedure as shown in Fig. 3 for initial access, reconnection, and the like. First, the UE receives an SS block (S10). The UE may establish DL synchronization by using synchronization signals (PSS (Primary Synchronization Signal) and SSS (Secondary Synchronization Signal)) included in the SS block.

After that, the UE receives DCI using CORESET associated with the SS block, and receives RMSI using PDSCH indicated by the DCI (S20). RMSI may include a PRACH (Physical Random Access Channel) configuration for a RACH procedure. Then, the UE performs a random access procedure using the PRACH configuration.

Thereafter, the UE transmits a message 1 (Msg.1, PRACH, random access preamble) based on the PRACH configuration (S30).

Then, the UE receives a message 2 (Msg.2, Random Access Response: RAR, RAR grant) (S40). Msg.2 may be transmitted by PDSCH. For example, timing advance (TA) and UL resource assignment may be included. The UE may establish UL synchronization based on the TA.

Then, the UE transmits a message 3 (Msg.3, higher layer (L2/L3) control message) based on the Msg.2 (S50). Msg.3 may include an identifier of the user terminal (which is, for example, C-RNTI (Cell-Radio Network Temporary Identifier)) and the like.

Then, the UE receives a message 4 (Msg.4, Contention resolution message) (S60). Msg.4 may be transmitted by PDSCH. The UE that has successfully detected Msg.4 transmits HARQ-ACK for Msg.4 (S70), and transitions from an RRC idle state to an RRC connected state (S80). HARQ-ACK for Msg.4 may be transmitted by PUCCH.

Msg.2 (RAR) transmitted by PDSCH may include at least one of the following pieces of information (fields).
- Frequency hopping flag ... 1 bit
- Msg.3 PUSCH frequency resource assignment ... 12 bits
- Msg.3 PUSCH time resource assignment ... 4 bits
- MCS (Modulation and Coding Scheme) ... 4 bits
- TPC (Transmission Power Control) command for Msg.3 PUSCH ... 3 bits
- CSI request ... 1 bit
- Reserved bits ... 2 bits

The DCI for scheduling Msg.2 may be transmitted with DCI format 1_0 having a CRC scrambled by RA (Random Access)-RNTI. This DCI may include at least one of the following pieces of information (fields).
- Frequency domain resource assignment
- Time domain resource assignment
- VRB (Virtual Resource Block) to PRB (Physical Resource Block) mapping (VRB-to-PRB mapping)
- MCS (Modulation and Coding Scheme)
- TB Scaling (Transport Block scaling)
- Reserved bits

Increase in the transport block (TB) size of Msg.3 in NR from that in LTE is under study. However, this may result in a smaller PUSCH coverage of Msg.3 in NR, than that in PUSCH coverage of Msg.3 in LTE. For example, under the same conditions in various evaluation environments, required E_{s/}N₀ (energy per symbol with respect to the noise power spectral density) for a 72-bit TB size is increased by 0.6 dB or more from that for a 56 bit TB size.

In view of this, the inventors of the present invention have come up with a method of appropriately implementing repetition in a random access procedure.

By implementing repetition for a signal in the random access procedure, the signal size can be increased without compromising the coverage.

Hereinafter, embodiments according to the present invention will be described in detail with reference to the drawings. The radio communication method according to each of the embodiments may be applied independently, or may be applied in combination with others.

It should be noted that in the following embodiments, any signal and channel may be read with a prefix "NR-" indicating that the signal is for NR. Furthermore, in the following description, PUSCH or PUCCH repetition on UL is mainly described as an example, but the description can be applied to PDSCH repetition on DL. Also, the following embodiments may be applied to repetition for signals and/or channels other than data.

In the following description, at least one of a UE that transmits a UL signal and a radio base station that transmits a DL signal may be read as a transmitting device. Furthermore, at least one of a UE that receives a DL signal and a radio base station that receives a UL signal may be read as a receiving device.

### (Mode 1)

K repetitions may be supported for Msg.3 initial transmission. The repetition count K for Msg.3 may be configured for the UE.

The PUSCH mapping type B may be used for Msg.3 PUSCH transmission.

The UE may perform repetition for Msg.3 PUSCH using the PUSCH mapping type B in one slot, and may perform repetition for Msg.3 PUSCH using the PUSCH mapping type B over a plurality of consecutive available slots. Examples of the available slots may include a slot configured for UL or a slot not configured for DL (configured for UL or flexibly configured) in semi-static DL/UL configuration.

The UE may determine the time resource of the first PUSCH of the repetition using the resource assignment table described above.

The UE may employ one of the following modes 1-1 to 1-3 for Msg.3 PUSCH transmission of the PUSCH mapping type B.

### <Mode 1-1>

The UE may repeat the first few PUSCH transmissions of the K PUSCH transmissions in one slot, and may wait for the first available symbol in the next slot and implement the remaining few PUSCH transmissions, to prevent a single PUSCH transmission from crossing the slot-boundary.

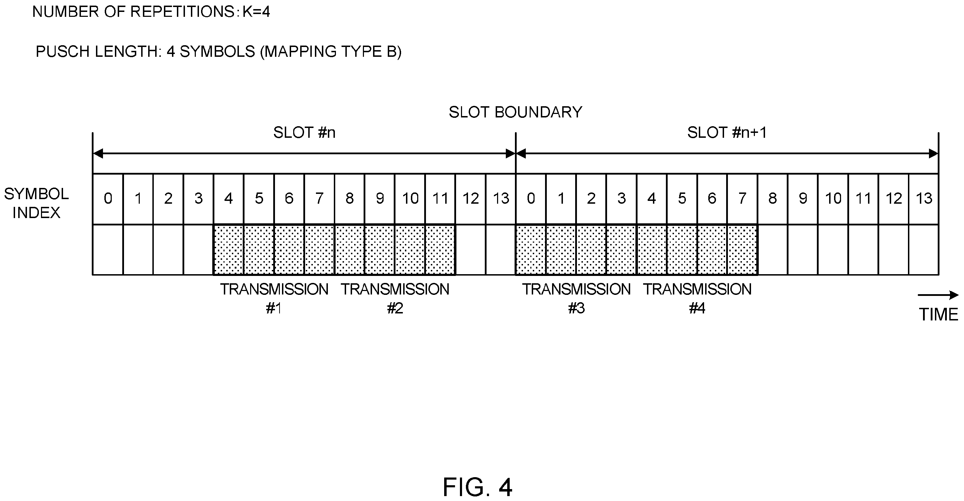

Fig. 4 shows an example of repetition with K being 4 and the PUSCH length being 4 symbols. The UE performs consecutive PUSCH transmissions #1 and #2 in slot #n, and consecutive PUSCH transmissions #3 and #4 from the first available symbol in the next slot #n+1.

### <Mode 1-2>

The UE may perform repetition with the same symbol assignment applied in each of the K slots. The application of the same symbol assignment in each of the K slots may be similar to the repetitions of the PUSCH mapping type A.

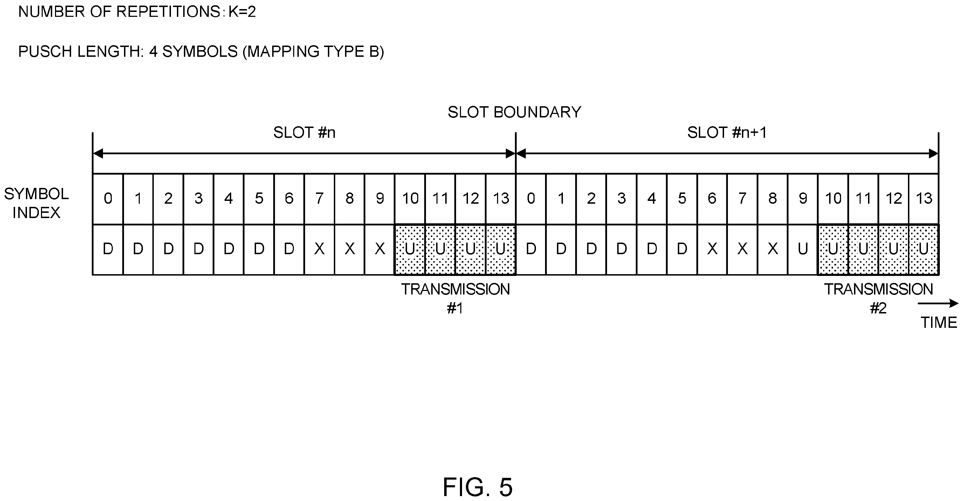

Fig. 5 shows an example of repetition with K being 2 and the PUSCH length being four symbols. The UE performs PUSCH transmission #1 on symbols #10 to #13 in slot #n, and performs PUSCH transmission #2 on the same symbols #10 to #13 in the next slot #n+1.

### <Mode 1-3>

The UE may employ Mode 1-2 when a given condition is satisfied, and may employ Mode 1-1 when the given condition is not satisfied. The given condition may be satisfied, for example, when the transmission time length (duration) L of PUSCH is seven symbols or more (L ≥ 7).

With Modes 1-1 to 1-3 described above, the repetition suitable for the PUSCH mapping type B is performed for Msg.3 using the PUSCH mapping type B. Thus, the repetition can be more flexibly implemented than in the case of using the PUSCH mapping type A, whereby resource use efficiency can be improved.

The PUSCH mapping type A may be used for Msg.3 PUSCH transmission.

The UE may perform repetition for the Msg.3 PUSCH using the PUSCH mapping type A over a plurality of consecutive available slots. The UE may perform repetition with the same symbol assignment applied in each of the K slots, as in Mode 1-2.

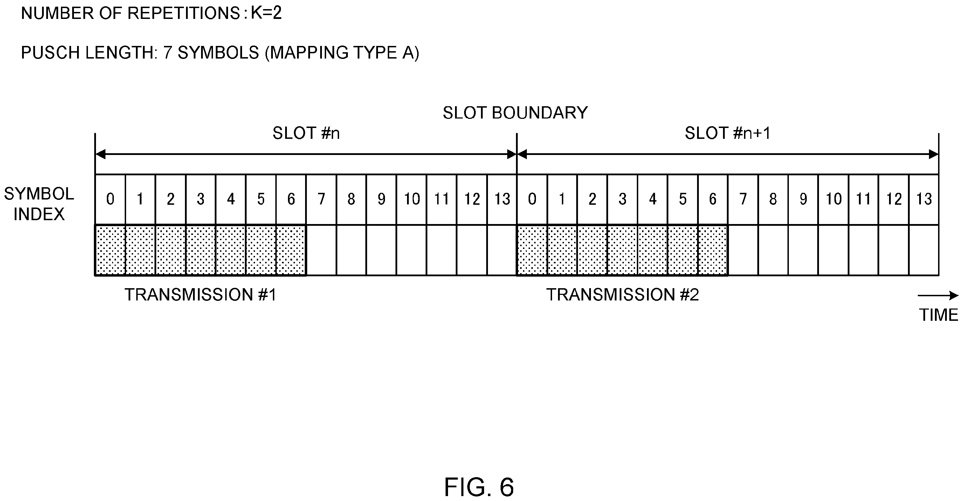

Fig. 6 shows an example of repetition with K being 2 and the PUSCH length being seven symbols. The UE performs PUSCH transmission #1 on symbols #0 to #6 in slot #n, and performs PUSCH transmission #2 on the same symbols #0 to #6 in the next slot #n+1.

### <Number of repetitions>

The number of repetition (repetition factor) K may be set by at least one of higher layer signaling (for example, RRC signaling) and RMSI. The number of repetition K may be indicated by a field in Msg.2 (RAR).

For example, if this field is 1 bit, it may indicate any one of 1 and 2. For example, if this field is 2 bits, K may indicate any one of 1, 2, 4, and 8.

When Msg.3 PUSCH transmission collides with the transmission direction indicated by the semi-static DL/UL configuration, the UE may drop or cancel the colliding PUSCH transmission, or wait for the next available transmission occasion to perform the PUSCH transmission. This collision may be a result of configuring the time resource (for example, slot, symbol) assigned to the Msg.3 PUSCH transmission to be DL by the semi-static DL/UL configuration, or a result of configuring the time resource configured not to be UL (for example, DL or flexible) by the semi-static DL/UL configuration. On the other hand, the available transmission occasion may be a time resource configured to be UL by the semi-static DL/UL configuration, or a time resource configured not to be DL by the semi-static DL/UL configuration (for example, UL or flexible).

### <Frequency hopping>

Frequency hopping may be applied in the K repetitions. The UE may apply the frequency hopping in the K repetitions, when the frequency hopping flag in Msg.2 (RAR) enables frequency hopping (enable), and when K larger than 1 is configured.

Intra-slot frequency hopping and inter-slot frequency hopping may not be concurrently enabled. The UE performs inter-slot frequency hopping when the frequency hopping is applied to the K repetitions, and the K repetitions occupy one slot or more, and otherwise performs intra-slot frequency hopping. Furthermore, the UE may always perform inter-slot frequency hopping when the frequency hopping is applied to K repetitions.

With the above-described Mode 1, the reception probability of the initial transmission of Msg.3 can be increased. Therefore, even if the TB size of Msg.3 increases, it is possible to suppress the reduction of the coverage.

### (Mode 2)

The Msg.3 retransmission will be described. When Msg.3 fails to be received normally, Msg.3 retransmissions may be scheduled using DCI.

The Msg.3 retransmission may be performed as in one of the following modes 2-1 and 2-2.

### <Mode 2-1>

The repetition may be supported for Msg.3 retransmission.

The UE may perform K' repetitions for PUSCH transmission for the Msg.3 retransmission. K' may be configured by one of the following implicit methods 1 and 2 and explicit methods 1 and 2.

### <<Implicit Method 1>>

K' may be K. Here, K is the number of repetition for the initial transmission of Msg.3. That is, the number of repetition K' for the Msg.3 retransmission may correspond to the number of repetition K for the initial transmission of Msg.3.

### <<Implicit Method 2>>

K' may be K+x. Here, x may be the Msg.3 retransmission number (current retransmission count). That is, the UE may perform K+x repetitions for the x-th retransmission of Msg.3. As in the case of power ramping in Msg.3 retransmission, the reception probability can be increased with the number of retransmissions.

### <<Explicit method 1>>

The DCI for scheduling Msg.3 retransmission may have a field indicating the number of repetitions.

### <<Explicit method 2>>

The UE may determine K' based on at least one of higher layer signaling (e.g., RRC signaling) and RMSI. For example, the UE may be configured with a repetition offset y based on at least one of higher layer signaling and RMSI, and K' may be K+y·x. x is the Msg.3 retransmission number (current retransmission count).

In Mode 2-1, the frequency hopping for the Msg.3 retransmission may be configured independently of the frequency hopping for the Msg.3 initial transmission. The frequency hopping for the Msg.3 retransmission may be the same as or different from the frequency hopping for the Msg.3 initial transmission.

The UE may perform frequency hopping for the Msg.3 retransmission in the same manner as the frequency hopping for the Msg.3 initial transmission in Mode 1.

The frequency hopping for the Msg.3 retransmission may be configured for the UE, independently of the frequency hopping for the Msg.3 initial transmission.

The frequency hopping for the Msg.3 retransmission may be performed in accordance with the frequency hopping for the Msg.3 initial transmission.

With the above-described Mode 2-1, the reception probability of the Msg.3 retransmission can be increased. Therefore, even if the TB size of Msg.3 increases, it is possible to suppress the reduction of the coverage.

### <Mode 2-2>

The repetition may not be supported for PUSCH transmission for the Msg.3 retransmission. The UE may assume that no repetition is performed for the Msg.3 retransmission.

### (Mode 3)

HARQ feedback for Msg.4 will be described.

HARQ feedback for Msg.4 may be performed as in one of the following modes 3-1 and 3-2.

### <Mode 3-1>

The repetition may be supported for HARQ feedback for Msg.4. HARQ feedback for Msg.4 may be transmitted by PUCCH.

The UE may perform K_{A/N} repetitions in response to HARQ feedback for Msg.4. K_{A/N} may be configured by one of the following implicit methods 1 and 2 and explicit methods 1 and 2.

### <<Implicit Method 1>>

K_{A/N} may be K. Here, K is the number of repetition for the initial transmission of Msg.3. Thus, the number of repetition K_{A/N} of HARQ feedback for Msg.4 may correspond to the number of repetition K of the Msg.3 initial transmission.

### <<Implicit Method 2>>

K_{A/N} may be K+x. Here, x may be the number of Msg.3 retransmissions. Thus, the UE may perform K+x repetitions when the Msg.3 retransmission is performed for x times. As in the case of power ramping in the Msg.3 retransmission, the reception probability can be increased with the number of Msg.3 retransmissions.

### <<Explicit method 1>>

Msg.4 is scheduled by DL DCI. The DCI for Msg.4 scheduling may include a field indicating the number of repetition K_{A/N} for HARQ feedback for Msg.4.

### <<Explicit method 2>>

The UE may determine K_{A/N} based on at least one of higher layer signaling (e.g., RRC signaling) and RMSI. For example, K_{A/N} may be associated with the PUCCH format for HARQ feedback for Msg.4.

Further, the PUCCH resource before setup of the RRC connection (before RRC connection) may include a parameter related to K_{A/N}. One of the plurality of PUCCH resources specified in the specification may be determined based on at least one of a field and an implicit value in RMSI. The implied value may be based on the PDCCH CCE index for the RMSI schedule.

For example, the UE may be configured with a repetition offset y based on at least one of higher layer signaling and RMSI, and K_{A/N} may be K+y·x. x may be the Msg.3 retransmission number (current retransmission count).

K in Mode 3-1 may be the number of Msg.4 repetitions. x in Mode 3-1 may be the Msg.4 retransmission number (current retransmission count).

The frequency hopping for HARQ feedback for Msg.4 may be performed in accordance with the frequency hopping for the Msg.3 initial transmission.

With the above-described Mode 3-1, the reception probability of the HARQ feedback for Msg.4 can be increased. Therefore, it is possible to prevent the coverage from being reduced.

### <Mode 3-2>

The repetition may not be supported for HARQ feedback for Msg.4. The UE may assume that no repetition for HARQ feedback for Msg.4 is performed.

### (Mode 4)

The DL signal in the random access procedure may be the same as that in the above-described modes.

Repetitions of the initial transmission may be supported for at least one of Msg.2 and Msg.4. Regarding the repetitions of the initial transmission, the PUSCH in Mode 1 may be read as PDSCH and the UE may be read as a radio base station. Thus, the radio base station may use PDSCH mapping type B or PDSCH mapping type A to perform the repetitions of the initial transmission of at least one of Msg.2 and Msg.4. The UE may receive the repetitions of the initial transmission of at least one of Msg.2 and Msg.4.

Repetitions of the retransmission may be supported for at least one of Msg.2 and Msg.4. Regarding the repetitions of the retransmission, the PUSCH in Mode 2 may be read as PDSCH and the UE may be read as a radio base station. Thus, the radio base station may determine the number of repetition K' for the retransmission, and perform the repetitions of the retransmission of at least one of Msg.2 and Msg.4. The UE may receive the repetitions of the retransmission of at least one of Msg.2 and Msg.4.

The repetitions of retransmission may not be supported for at least one of Msg.2 and Msg.4.

With Mode 4, the repetitions of the DL signal are performed in the random access procedure, so that the reduction of the coverage can be suppressed.

### (Radio Communication System)

Now, the structure of a radio communication system according to one embodiment of the present invention will be described below. In this radio communication system, communication is performed using one or a combination of the radio communication methods according to the embodiments of the present invention described above.

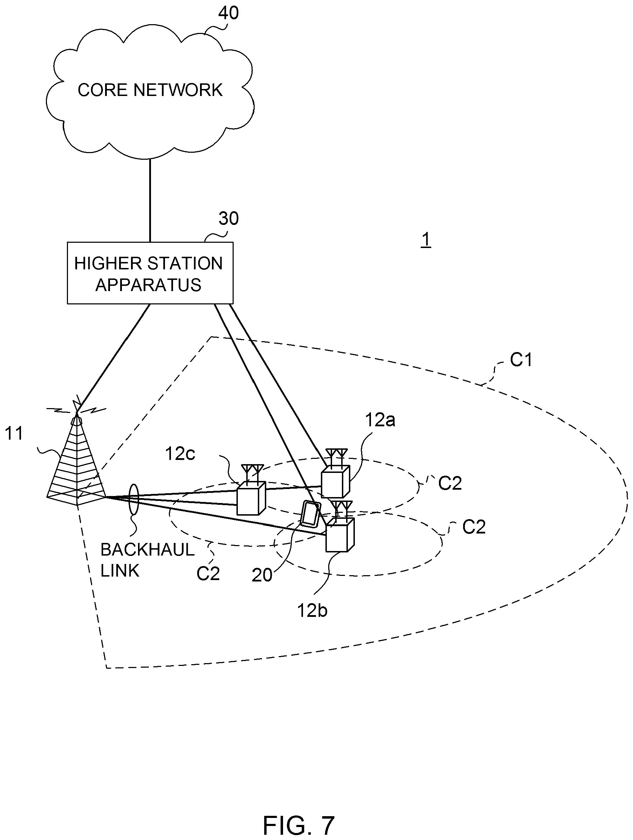

Fig. 7 is a diagram showing an example of a schematic structure of a radio communication system according to one embodiment of the present invention. A radio communication system 1 can adopt carrier aggregation (CA) and/or dual connectivity (DC) to group a plurality of fundamental frequency blocks (component carriers) into one, where the LTE system bandwidth (for example, 20 MHz) constitutes one unit.

The radio communication system 1 may be called LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), NR (New Radio), FRA(Future Radio Access), New-RAT (Radio Access Technology), and the like, or may be called a system that achieves these.

The radio communication system 1 includes a radio base station 11 that forms a macro cell C1 covering a relatively wide coverage, and radio base stations 12 (12a to 12c) that are placed within the macro cell C1 and that form small cells C2, which are narrower than the macro cell C1. Also, user terminals 20 are placed in the macro cell C1 and in each small cell C2. The arrangement, number and so on of cells and user terminals 20 are not limited to those illustrated in the drawings.

The user terminals 20 can connect with both the radio base station 11 and the radio base stations 12. The user terminals 20 may use the macro cell C1 and the small cells C2 at the same time using CA or DC. Furthermore, the user terminals 20 may apply CA or DC using a plurality of cells (CCs) (for example, five or fewer CCs or six or more CCs).

Between the user terminals 20 and the radio base station 11, communication can be carried out using a carrier of a relatively low frequency band (for example, 2 GHz) and a narrow bandwidth (referred to as an "existing carrier", a "legacy carrier" and so on). Meanwhile, between the user terminals 20 and the radio base stations 12, a carrier of a relatively high frequency band (for example, 3.5 GHz, 5 GHz and so on) and a wide bandwidth may be used, or the same carrier as that used in the radio base station 11 may be used. Note that the structure of the frequency band for use in each radio base station is by no means limited to these.

Moreover, the user terminal 20 can perform communication in each cell using time division duplex (TDD) and/or frequency division duplex (FDD). Further, in each cell (carrier), a single numerology may be applied, or a plurality of different numerologies may be applied.

The radio base station 11 and the radio base station 12 (or between 2 radio base stations 12) may be connected by wire (for example, means in compliance with the CPRI (Common Public Radio Interface) such as optical fiber, an X2 interface and so on) or wirelessly.

The radio base station 11 and each of the radio base stations 12 are independently connected with a higher station apparatus 30, and are connected with a core network 40 via the higher station apparatus 30. Note that the higher station apparatus 30 may be, for example, access gateway apparatus, a radio network controller (RNC), a mobility management entity (MME) and so on, but is by no means limited to these. Also, each radio base station 12 may be connected with the higher station apparatus 30 via the radio base station 11.

Note that the radio base station 11 is a radio base station having a relatively wide coverage, and may be referred to as a "macro base station", a "central node", an "eNB (eNodeB)", a "transmitting/receiving point" and so on. Also, the radio base stations 12 are radio base stations having local coverages, and may be referred to as "small base stations", "micro base stations", "pico base stations", "femto base stations", "HeNBs (Home eNodeBs)", "RRHs (Remote Radio Heads)", "transmitting/receiving points" and so on. Hereinafter the radio base stations 11 and 12 will be collectively referred to as "radio base stations 10", unless specified otherwise.

The user terminals 20 are terminals to support various communication schemes such as LTE, LTE-A and so on, and may be either mobile communication terminals (mobile stations) or stationary communication terminals (fixed stations).

In the radio communication system 1, as radio access schemes, orthogonal frequency division multiple access (OFDMA) is applied to the downlink, and single-carrier frequency division multiple access (SC-FDMA) and/or OFDMA are applied to the uplink.

OFDMA is a multi-carrier communication scheme to perform communication by dividing a frequency bandwidth into a plurality of narrow frequency bandwidths (subcarriers) and mapping data to each subcarrier. SC-FDMA is a single-carrier communication scheme to mitigate interference between terminals by dividing the system bandwidth into bands formed with one or continuous resource blocks per terminal, and allowing a plurality of terminals to use mutually different bands. The uplink and downlink radio access methods are not limited to combinations of these, and other radio access methods may be used.

In the radio communication system 1, a downlink shared channel (PDSCH (Physical Downlink Shared Channel)), which is used by each user terminal 20 on a shared basis, a broadcast channel (PBCH (Physical Broadcast Channel)), downlink L1/L2 control channels and so on are used as downlink channels. User data, higher layer control information and SIBs (System Information Blocks) are transmitted in the PDSCH. Further, MIB (Master Information Block) is transmitted by PBCH.

The downlink L1/L2 control channels include PDCCH (Physical Downlink Control Channel), EPDCCH (Enhanced Physical Downlink Control Channel), PCFICH (Physical Control Format Indicator Channel), PHICH (Physical Hybrid-ARQ Indicator Channel) and so on. Downlink control information (DCI), including PDSCH and/or PUSCH scheduling information, and so on, is transmitted by the PDCCH.

Note that scheduling information may be reported via DCI. For example, the DCI to schedule receipt of DL data may be referred to as "DL assignment", and the DCI to schedule transmission of UL data may be referred to as "UL grant".

The number of OFDM symbols to use for the PDCCH is transmitted by the PCFICH. HARQ (Hybrid Automatic Repeat reQuest) delivery acknowledgment information (also referred to as, for example, "retransmission control information", "HARQ-ACKs", "ACK/NACKs" and so on) in response to the PUSCH is transmitted by the PHICH. The EPDCCH is frequency-division-multiplexed with the PDSCH (downlink shared data channel) and used to transmit DCI and so on, like the PDCCH.

In the radio communication system 1, an uplink shared channel (PUSCH (Physical Uplink Shared Channel)), which is used by each user terminal 20 on a shared basis, an uplink control channel (PUCCH (Physical Uplink Control Channel)), a random access channel (PRACH (Physical Random Access Channel)) and so on are used as uplink channels. User data, higher layer control information, and the like are transmitted by PUSCH. Also, in the PUCCH, downlink radio quality information (CQI (Channel Quality Indicator)), delivery acknowledgment information, scheduling requests (SRs) and so on are transmitted. By means of the PRACH, random access preambles for establishing connections with cells are transmitted.

In the radio communication systems 1, cell-specific reference signals (CRSs), channel state information-reference signals (CSI-RSs), demodulation reference signals (DMRSs), positioning reference signals (PRSs) and so on are transmitted as downlink reference signals. Also, in the radio communication system 1, measurement reference signals (SRSs (Sounding Reference Signals)), demodulation reference signals (DMRSs) and so on are transmitted as uplink reference signals. Note that, DMRSs may be referred to as "user terminal-specific reference signals (UE-specific Reference Signals)". Also, the reference signals to be transmitted are by no means limited to these.

### (Radio Base Station)

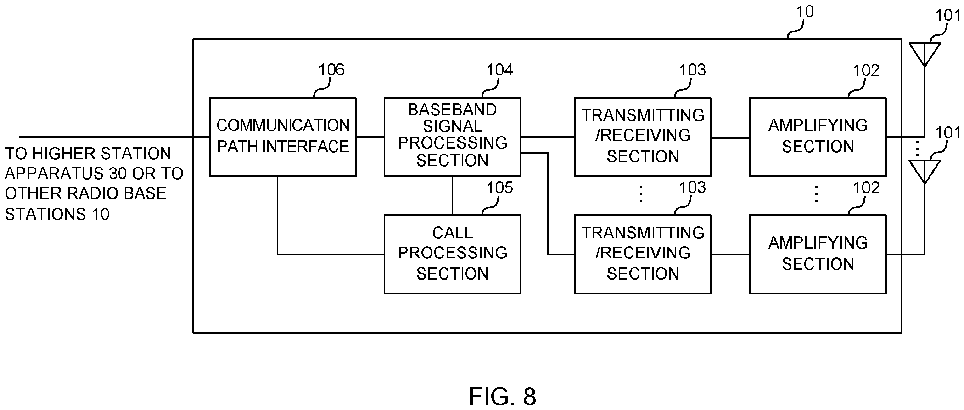

Fig. 8 is a diagram showing an example of an overall configuration of a radio base station according to one embodiment of the present invention. The radio base station 10 has a plurality of transmitting/receiving antennas 101, amplifying sections 102, transmitting/receiving sections 103, a baseband signal processing section 104, a call processing section 105 and a communication path interface 106. Note that one or more transmitting/receiving antennas 101, amplifying sections 102 and transmitting/receiving sections 103 may be provided.

User data to be transmitted from the radio base station 10 to a user terminal 20 on the downlink is input from the higher station apparatus 30 to the baseband signal processing section 104, via the communication path interface 106.

In the baseband signal processing section 104, user data is subjected to transmission processes, including a PDCP (Packet Data Convergence Protocol) layer process, division and coupling of the user data, RLC (Radio Link Control) layer transmission processes such as RLC retransmission control, MAC (Medium Access Control) retransmission control (for example, an HARQ (Hybrid Automatic Repeat reQuest) transmission process), scheduling, transport format selection, channel coding, an inverse fast Fourier transform (IFFT) process and a precoding process, and the result is forwarded to each transmitting/receiving section 103. Furthermore, downlink control signals are also subjected to transmission processing such as channel coding and inverse fast Fourier transform, and are transferred to the transmitting/receiving sections 103.

Baseband signals that are pre-coded and output from the baseband signal processing section 104 on a per antenna basis are converted into a radio frequency band in the transmitting/receiving sections 103, and then transmitted. The radio frequency signals having been subjected to frequency conversion in the transmitting/receiving sections 103 are amplified in the amplifying sections 102, and transmitted from the transmitting/receiving antennas 101. The transmitting/receiving sections 103 can be constituted by transmitters/receivers, transmitting/receiving circuits or transmitting/receiving device that can be described based on general understanding of the technical field to which the present invention pertains. Note that the transmitting/receiving section 103 may be structured as a transmitting/receiving section in one entity, or may be constituted by a transmitting section and a receiving section.

Meanwhile, as for uplink signals, radio frequency signals that are received in the transmitting/receiving antennas 101 are each amplified in the amplifying sections 102. The transmitting/receiving sections 103 receive the uplink signals amplified in the amplifying sections 102. The received signals are converted into the baseband signal through frequency conversion in the transmitting/receiving sections 103 and output to the baseband signal processing section 104.

In the baseband signal processing section 104, user data included in the input uplink signal is subjected to fast Fourier transform (FFT) processing, inverse discrete Fourier transform (IDFT) processing, error correction decoding, receiving processing for MAC retransmission control, and receiving processing for an RLC layer and a PDCP layer, and the uplink data is transferred to the host station apparatus 30 via the communication path interface 106. The call processing section 105 performs call processing (such as setting and releasing) for communication channels, manages states of the radio base stations 10, manages the radio resources, and so on.

The communication path interface 106 transmits and receives signals to and from the higher station apparatus 30 via a given interface. Moreover, the communication path interface 106 may transmit and receive (perform backhaul signaling for) signals with other radio base stations 10 via an inter-base station interface (for example, optical fiber in compliance with CPRI (Common Public Radio Interface), and the X2 interface).

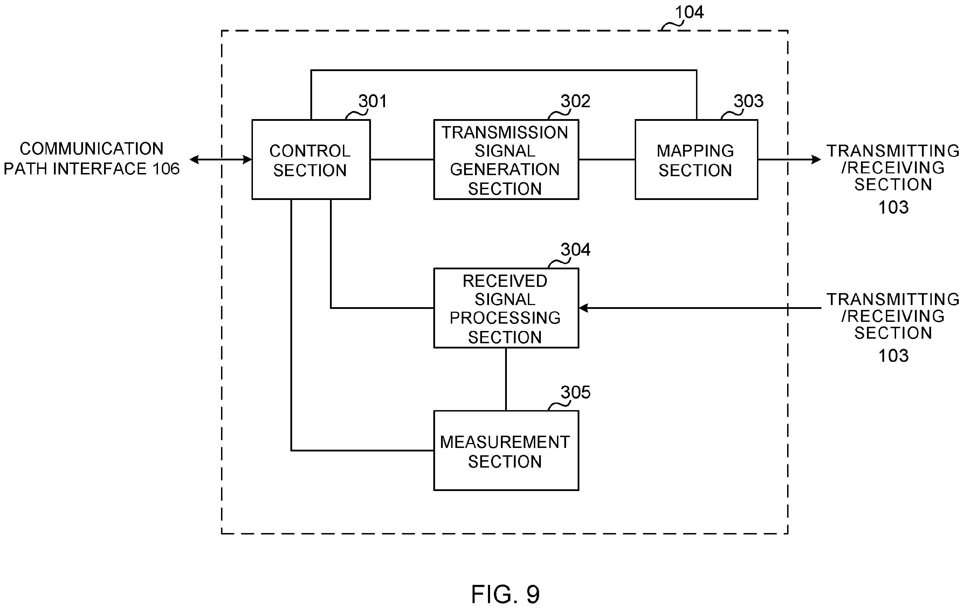

Fig. 9 is a diagram showing an example of a functional configuration of the radio base station according to the embodiment of the present invention. Note that, although this example will primarily show functional blocks that pertain to characteristic parts of the present embodiment, it may be assumed that the radio base station 10 has other functional blocks that are necessary for radio communication as well.

The baseband signal processing section 104 includes at least a control section (scheduler) 301, a transmission signal generation section 302, a mapping section 303, a received signal processing section 304, and a measurement section 305. Note that these configurations have only to be included in the radio base station 10, and some or all of these configurations may not be included in the baseband signal processing section 104.

The control section (scheduler) 301 controls the whole of the radio base station 10. The control section 301 can be constituted by a controller, a control circuit or control apparatus that can be described based on general understanding of the technical field to which the present invention pertains.

The control section 301, for example, controls the generation of signals in the transmission signal generation section 302, the assignment of signals by the mapping section 303 and so on. Furthermore, the control section 301 controls the signal receiving processes in the received signal processing section 304, the measurements of signals in the measurement section 305, and so on.

The control section 301 controls the scheduling (for example, resource assignment) of system information, downlink data signals (for example, signals transmitted in the PDSCH), and downlink control signals (for example, signals that are transmitted in the PDCCH and/or the EPDCCH, such as delivery acknowledgement information). The control section 301 controls the generation of downlink control signals, downlink data signals and so on, based on the results of determining whether or not retransmission control is necessary for uplink data signals, and so on. Also, the control section 301 controls the scheduling of synchronization signals (for example, the PSS (Primary Synchronization Signal)/SSS (Secondary Synchronization Signal)), downlink reference signals (for example, the CRS, the CSI-RS, the DMRS, etc.) and so on.

The control section 301 controls the scheduling for uplink data signals (for example, signals transmitted in the PUSCH), uplink control signals (for example, signals that are transmitted in the PUCCH and/or the PUSCH, and delivery acknowledgement information), random access preambles (for example, signals transmitted in the PRACH), uplink reference signals, and the like.

The transmission signal generation section 302 generates downlink signals (downlink control signals, downlink data signals, downlink reference signals and so on) based on commands from the control section 301, and outputs these signals to the mapping section 303. The transmission signal generation section 302 can be constituted by a signal generator, a signal generating circuit or signal generation apparatus that can be described based on general understanding of the technical field to which the present invention pertains.

For example, the transmission signal generation section 302 generates DL assignments, which report downlink data assignment information, and/or UL grants, which report uplink data assignment information, based on the instruction from the control section 301. DL assignments and UL grants are both DCI, and follow the DCI format. Further, the downlink data signals are subjected to coding processing and modulation processing in accordance with a coding rate and a modulation scheme, which are determined based on channel state information (CSI) reported from each user terminal 20.

The mapping section 303 maps the downlink signals generated in the transmission signal generation section 302 to given radio resources based on commands from the control section 301, and outputs these to the transmitting/receiving sections 103. The mapping section 303 can be constituted by a mapper, a mapping circuit or mapping apparatus that can be described based on general understanding of the technical field to which the present invention pertains.

The received signal processing section 304 performs receiving processes (for example, demapping, demodulation, decoding and so on) of received signals that are input from the transmitting/receiving sections 103. Here, the received signals include, for example, uplink signals transmitted from the user terminals 20 (uplink control signals, uplink data signals, uplink reference signals, etc.). For the received signal processing section 304, a signal processor, a signal processing circuit or signal processing apparatus that can be described based on general understanding of the technical field to which the present invention pertains can be used.

The received signal processing section 304 outputs, to the control section 301, information decoded by the receiving processing. For example, when a PUCCH to contain an HARQ-ACK is received, the received signal processing section 304 outputs this HARQ-ACK to the control section 301. Also, the received signal processing section 304 outputs the received signals and/or the signals after the receiving processes to the measurement section 305.

The measurement section 305 conducts measurements with respect to the received signals. The measurement section 305 can be constituted by a measurer, a measurement circuit or measurement apparatus that can be described based on general understanding of the technical field to which the present invention pertains.

For example, the measurement section 305 may perform RRM (Radio Resource Management) measurement, CSI (Channel State Information) measurement, and the like based on the received signals. The measurement section 305 may measure the received power (for example, RSRP (Reference Signal Received Power)), the received quality (for example, RSRQ (Reference Signal Received Quality), SINR (Signal to Interference plus Noise Ratio), SNR (Signal to Noise Ratio), etc.), the signal strength (for example, RSSI (Received Signal Strength Indicator)), transmission path information (for example, CSI), and so on. The measurement results may be output to the control section 301.

Further, the transmitting/receiving section 103 may transmit a signal in the random access procedure. The control section 301 may control repetitions of a message including one of data using the data mapping type B (for example, Msg.2, Msg.4) and HARQ (Hybrid Automatic Repeat reQuest) feedback.

Further, the transmitting/receiving section 103 may receive a signal in the random access procedure. The control section 301 may control reception of the repetitions of a message including one of data using the data mapping type B (for example, Msg.3) and HARQ (Hybrid Automatic Repeat reQuest) feedback (for example, HARQ feedback for Msg.4).

### (User Terminal)

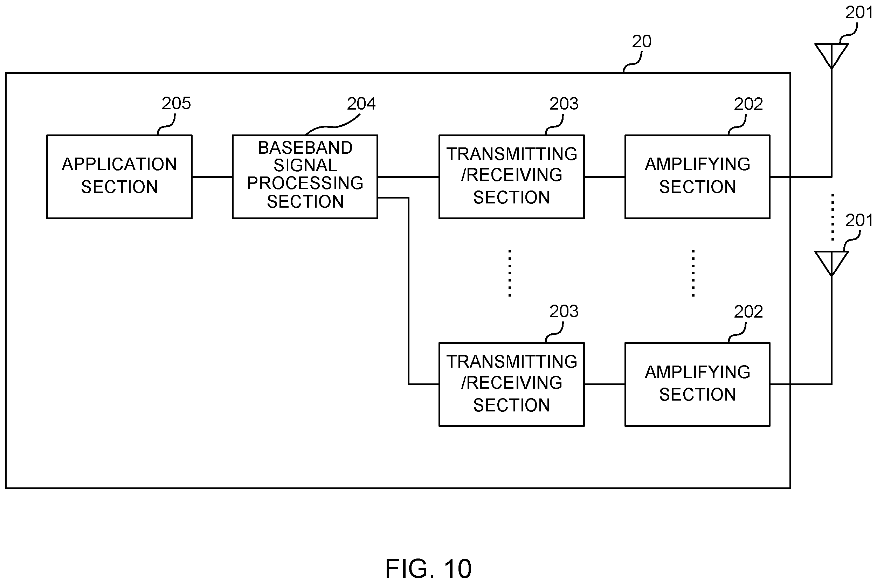

Fig. 10 is a diagram showing an example of an overall configuration of a user terminal according to one embodiment of the present invention. A user terminal 20 has a plurality of transmitting/receiving antennas 201, amplifying sections 202, transmitting/receiving sections 203, a baseband signal processing section 204 and an application section 205. Note that one or more transmitting/receiving antennas 201, amplifying sections 202 and transmitting/receiving sections 203 may be provided.

Radio frequency signals that are received in the transmitting/receiving antennas 201 are amplified in the amplifying sections 202. The transmitting/receiving sections 203 receive the downlink signals amplified in the amplifying sections 202. The received signals are subjected to frequency conversion and converted into the baseband signal in the transmitting/receiving sections 203, and output to the baseband signal processing section 204. The transmitting/receiving sections 203 can be constituted by transmitters/receivers, transmitting/receiving circuits or transmitting/receiving device that can be described based on general understanding of the technical field to which the present invention pertains. The transmitting/receiving section 203 may be composed of an integrated transmitting/receiving section, or may be composed of a transmitting section and a receiving section.

The baseband signal processing section 204 performs receiving processes for the baseband signal that is input, including an FFT process, error correction decoding, a retransmission control receiving process and so on. Downlink user data is forwarded to the application section 205. The application section 205 performs processes related to higher layers above the physical layer and the MAC layer, and so on. Further, in the downlink data, broadcast information may also be transferred to the application section 205.

Meanwhile, uplink user data is input from the application section 205 to the baseband signal processing section 204. The baseband signal processing section 204 performs a retransmission control transmission process (for example, an HARQ transmission process), channel coding, precoding, a discrete Fourier transform (DFT) process, an IFFT process and so on, and the result is forwarded to the transmitting/receiving section 203. Baseband signals that are output from the baseband signal processing section 204 are converted into a radio frequency band in the transmitting/receiving sections 203 and transmitted. The radio frequency signals having been subjected to frequency conversion in the transmitting/receiving sections 203 are amplified in the amplifying sections 202, and transmitted from the transmitting/receiving antennas 201.

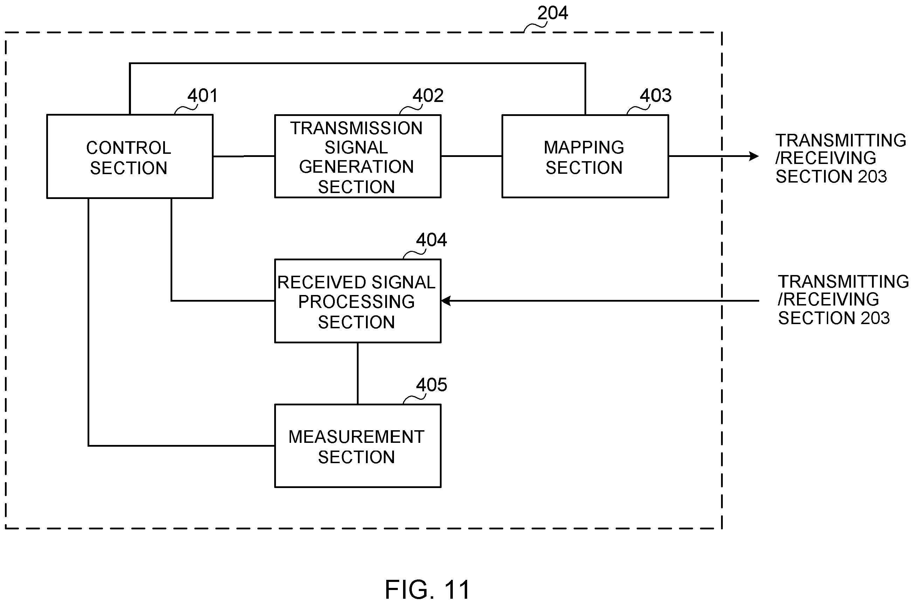

Fig. 11 is a diagram showing an example of a functional configuration of the user terminal according to the embodiment of the present invention. Note that, although this example will primarily show functional blocks that pertain to characteristic parts of the present embodiment, it may be assumed that the user terminal 20 has other functional blocks that are necessary for radio communication as well.

The baseband signal processing section 204 provided in the user terminal 20 at least includes the control section 401, a transmission signal generation section 402, a mapping section 403, a received signal processing section 404 and a measurement section 405. These configurations just need to be included in the user terminal 20, and some or all of the configurations need not be included in the baseband signal processing section 204.

The control section 401 controls the whole of the user terminal 20. The control section 401 can be constituted by a controller, a control circuit or control apparatus that can be described based on general understanding of the technical field to which the present invention pertains.

The control section 401, for example, controls the generation of signals in the transmission signal generation section 402, the assignment of signals in the mapping section 403, and so on. Furthermore, the control section 401 controls the signal receiving processes in the received signal processing section 404, the measurements of signals in the measurement section 405 and so on.

The control section 401 acquires the downlink control signals and downlink data signals, which are transmitted from the radio base station 10, from the received signal processing section 404. The control section 401 controls the generation of uplink control signals and/or uplink data signals based on results of determining whether or not retransmission control is necessary for the downlink control signals and/or the downlink data signals.

The transmission signal generation section 402 generates uplink signals (uplink control signals, uplink data signals, uplink reference signals, etc.) based on commands from the control section 401, and outputs these signals to the mapping section 403. The transmission signal generation section 402 can be constituted by a signal generator, a signal generating circuit or signal generation apparatus that can be described based on general understanding of the technical field to which the present invention pertains.

For example, the transmission signal generation section 402 generates uplink control signals such as delivery acknowledgement information, channel state information (CSI) and so on, based on commands from the control section 401. Also, the transmission signal generation section 402 generates uplink data signals based on commands from the control section 401. For example, when a UL grant is included in the downlink control signal reported from the radio base station 10, the transmission signal generation section 402 is instructed by the control section 401 to generate an uplink data signal.

The mapping section 403 maps the uplink signals generated in the transmission signal generation section 402 to radio resources based on commands from the control section 401, and outputs the result to the transmitting/receiving section 203. The mapping section 403 can be constituted by a mapper, a mapping circuit or mapping apparatus that can be described based on general understanding of the technical field to which the present invention pertains.

The received signal processing section 404 performs receiving processing (for example, demapping, demodulation, decoding, and the like) for received signals input from the transmitting/receiving sections 203. Here, the received signals include, for example, downlink signals (downlink control signals, downlink data signals, downlink reference signals and so on) that are transmitted from the radio base station 10. The received signal processing section 404 can be constituted by a signal processor, a signal processing circuit or signal processing apparatus that can be described based on general understanding of the technical field to which the present invention pertains. Also, the received signal processing section 404 can constitute the receiving section according to the present invention.

The received signal processing section 404 outputs the decoded information that is acquired through the receiving processes to the control section 401. The received signal processing section 404 outputs, for example, broadcast information, system information, RRC signaling, DCI and so on, to the control section 401. Also, the received signal processing section 404 outputs the received signals and/or the signals after the receiving processes to the measurement section 405.

The measurement section 405 conducts measurements with respect to the received signals. The measurement section 405 can be constituted by a measurer, a measurement circuit or measurement apparatus that can be described based on general understanding of the technical field to which the present invention pertains.

For example, the measurement section 405 may perform RRM measurements, CSI measurements and so on based on the received signals. The measurement section 405 may measure the received power (for example, RSRP), the received quality (for example, RSRQ, SINR, SNR, etc.), the signal strength (for example, RSSI), transmission path information (for example, CSI), and so on. The measurement results may be output to the control section 401.

Further, the transmitting/receiving section 203 may transmit a signal in the random access procedure. The control section 401 may control the repetitions of a message including one of data using the data mapping type B (for example, Msg.3) and HARQ (Hybrid Automatic Repeat reQuest) feedback (for example, HARQ feedback for Msg.4).

Furthermore, the control section 401 may perform at least one of assigning a plurality of the messages to at least each one slot and assigning the message to the same symbol in each of the plurality of slots.

Further, the control section 401 may apply repetitions to the initial transmission of the message.

Furthermore, based on at least one of the number of repetition for the initial transmission of a given message (for example, Msg.3, Msg.4) and the number of retransmissions of the given message, the control section 401 may determine the number of repetition for the retransmission of the message.

Furthermore, based on at least one of the system information (for example, RMSI, MIB, SIB), higher layer signaling (for example, RRC signaling), and the downlink control information (DCI), the control section 401 may determine the number of repetition for the message.

Further, the transmitting/receiving section 203 may receive a signal in the random access procedure. The control section 401 may control reception of the repetitions of a message including one of data using the data mapping type B (for example, Msg.2, Msg.4) and HARQ (Hybrid Automatic Repeat reQuest) feedback.

### (Hardware configuration)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be achieved by a single apparatus physically or logically aggregated, or may be achieved by directly or indirectly connecting two or more physically or logically separate apparatuses (using wires, radio, or the like, for example) and using these plural apparatuses.

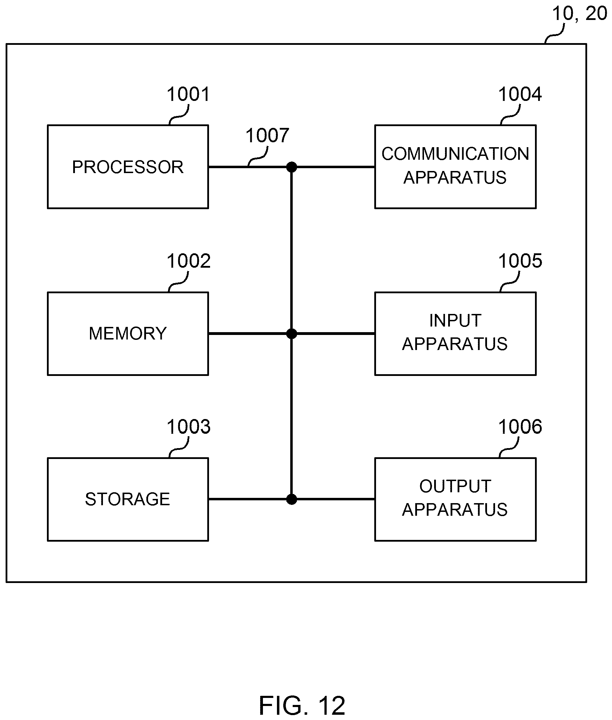

For example, the radio base station, user terminals and so on according to embodiments of the present disclosure may function as a computer that executes the processes of the radio communication method of the present disclosure. Fig. 12 is a diagram showing an example of a hardware structure of the radio base station and the user terminal according to the embodiment. Physically, the above-described radio base stations 10 and user terminals 20 may be formed as a computer apparatus that includes a processor 1001, a memory 1002, a storage 1003, communication apparatus 1004, input apparatus 1005, output apparatus 1006, and a bus 1007.

Note that, in the following description, the word "apparatus" may be replaced by "circuit", "device", "unit" and so on. The hardware configuration of each of the radio base station 10 and the user terminal 20 may be composed so as to include one or plurality of each apparatus illustrated in the drawing, or may be composed so as not to include a part of the apparatuses.

For example, although only one processor 1001 is illustrated, a plurality of processors may be provided. Furthermore, the processing may be executed by one processor, or the processing may be executed in sequence or in different manners by one or more processors. Note that the processor 1001 may be implemented with one or more chips.

Each function of the radio base station 10 and the user terminal 20 is implemented by reading given software (program) on hardware such as the processor 1001 and the memory 1002, and by controlling the calculations in the processor 1001, the communication in the communication apparatus 1004, and at least one of the reading and writing of data in the memory 1002 and the storage 1003.

The processor 1001 may control the whole computer by, for example, running an operating system. The processor 1001 may be configured with a central processing unit (CPU), which includes interfaces with peripheral apparatuses, a control apparatus, a computing apparatus, a register, and the like. For example, the baseband signal processing section 104 (204), the call processing section 105 and the like, which are mentioned above, may be achieved by the processor 1001.

Furthermore, the processor 1001 reads programs (program codes), software modules or data, from at least one of the storage 1003 and the communication apparatus 1004, into the memory 1002, and executes various processes according to these. As for the programs, programs to allow computers to execute at least part of the operations of the above-described embodiments may be used. For example, the control section 401 of the user terminal 20 may be achieved by a control program that is stored in the memory 1002 and operates in the processor 1001, and other functional blocks may be achieved likewise.

The memory 1002 is a computer-readable recording medium, and may be constituted by, for example, at least one of a ROM (Read Only Memory), an EPROM (Erasable Programmable ROM), an EEPROM (Electrically EPROM), a RAM (Random Access Memory) and/or other appropriate storage media. The memory 1002 may be referred to as a "register", a "cache", a "main memory (primary storage apparatus)" and so on. The memory 1002 can store a program (program code), a software module, and the like, which are executable for implementing the radio communication method according to the embodiment of the present disclosure.

The storage 1003 is a computer-readable recording medium, and for example, may be composed of at least one of a flexible disk, a floppy (registered trademark) disk, a magneto-optical disk (for example, a compact disc (CD-ROM (Compact Disc ROM) and the like), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be called an auxiliary storage apparatus.

The communication apparatus 1004 is hardware (transmitting/receiving device) for performing inter-computer communication via at least one of a wired network and a wireless network, and for example, is referred to as "network device", "network controller", "network card", "communication module", and the like. The communication apparatus 1004 may be configured to include a high frequency switch, a duplexer, a filter, a frequency synthesizer and so on in order to realize, for example, at least one of frequency division duplex (FDD) and time division duplex (TDD). For example, the transmitting/receiving antennas 101 (201), the amplifying sections 102 (202), the transmitting/receiving sections 103 (203), the communication path interface 106, and the like, which are mentioned above, may be achieved by the communication apparatus 1004.

The input apparatus 1005 is an input device for receiving input from the outside (for example, a keyboard, a mouse, a microphone, a switch, a button, a sensor and so on). The output apparatus 1006 is an output device for allowing sending output to the outside (for example, a display, a speaker, an LED (Light Emitting Diode) lamp and so on). The input apparatus 1005 and the output apparatus 1006 may have an integrated configuration (for example, a touch panel).

Furthermore, these pieces of apparatus, including the processor 1001, the memory 1002 and so on are connected by the bus 1007 so as to communicate information. The bus 1007 may be composed using a single bus, or may be composed using buses different between the apparatuses.

Also, the radio base station 10 and the user terminal 20 may be configured to include hardware such as a microprocessor, a digital signal processor (DSP), an ASIC (Application-Specific Integrated Circuit), a PLD (Programmable Logic Device), and an FPGA (Field Programmable Gate Array), and all or some of the functional blocks may be implemented by the hardware. For example, the processor 1001 may be implemented with at least one of these pieces of hardware.

### (Variations)

Note that the terminology used in the present disclosure and the terminology that is needed to understand the present disclosure may be replaced by other terms that convey the same or similar meanings. For example, at least one of "channels" and "symbols" may be replaced by "signals" (or "signaling"). The signal may also be a message. A reference signal may be abbreviated as an "RS", and may be referred to as a "pilot", a "pilot signal" and so on, depending on which standard applies. Furthermore, a component carrier (CC) may be referred to as "cell", "frequency carrier", "carrier frequency", or the like.

Furthermore, a radio frame may be comprised of one or more periods (frames) in the time domain. Each of one or more periods (frames) constituting a radio frame may be referred to as a "subframe". Furthermore, a subframe may be comprised of one or multiple slots in the time domain. A subframe may be a fixed time duration (for example, 1 ms) not dependent on the numerology.

Furthermore, a slot may be comprised of one or more symbols in the time domain (OFDM (Orthogonal Frequency Division Multiplexing) symbols, SC-FDMA (Single Carrier Frequency Division Multiple Access) symbols and so on). Further, the slot may be a unit of time based on numerology.

Also, a slot may include a plurality of mini-slots. Each mini-slot may be comprised of one or more symbols in the time domain. Further, the mini-slot may be called a sub-slot. A mini-slot may be composed of fewer symbols than slots. A PDSCH and PUSCH transmitted in a time unit larger than a mini-slot may be referred to as PDSCH/PUSCH mapping type A. A PDSCH and PUSCH transmitted using a mini-slot may be referred to as PDSCH/PUSCH mapping type B.

Each of the radio frame, the subframe, the slot, the mini-slot, and the symbol represents a unit of time at the time of transmitting a signal. A radio frame, a subframe, a slot, a mini-slot, and a symbol may be called by other respective applicable names. For example, one subframe may be called a Transmission Time Interval (TTI), or a plurality of consecutive subframes may be called TTI, or one slot or mini-slot may be called TTI. That is, at least one of a subframe and a TTI may be a subframe (1 ms) in existing LTE, may be a shorter period than 1 ms (for example, one to thirteen symbols), or may be a longer period of time than 1 ms. Note that the unit to represent the TTI may be referred to as a "slot", a "mini slot" and so on, instead of a "subframe".

Here, a TTI refers to the minimum time unit of scheduling in radio communication, for example. For example, in LTE systems, a radio base station schedules radio resources (frequency bandwidth and transmission power that can be used in each user terminal, and the like) to be assigned to each user terminal on a TTI basis. Note that the definition of TTIs is not limited thereto.

TTI may be a unit of time of transmitting channel-encoded data packets (transport blocks), code blocks, codewords, and the like, or may be a unit of processing for scheduling, link adaptation, and the like. When TTI is given, a time interval (for example, the number of symbols) in which the transport blocks, the code blocks, the codewords, and the like are actually mapped may be shorter than TTI.

Note that, when one slot or one mini-slot is referred to as a "TTI", one or more TTIs (that is, one or multiple slots or one or more mini-slots) may be the minimum time unit of scheduling. Moreover, the number of slots (the number of mini-slots) which constitute the minimum unit of time of the scheduling may be controlled.

TTI having a time length of 1 ms may be called usual TTI (TTI in LTE Rel. 8 to 12), normal TTI, long TTI, a usual subframe, a normal subframe, a long subframe, or the like. A TTI that is shorter than a usual TTI may be referred to as "shortened TTI", "short TTI", "partial TTI" (or "fractional TTI"), "shortened subframe", "short subframe", "mini-slot", "sub-slot", or the like.

Note that a long TTI (for example, a usual TTI, a subframe, etc.) may be replaced by a TTI having a time duration exceeding 1 ms, and a short TTI (for example, a shortened TTI) may be replaced by a TTI having a TTI duration less than the TTI duration of a long TTI and not less than 1 ms.

The resource block (RB) is the unit of resource assignment in the time domain and the frequency domain, and may include one or plurality of consecutive subcarriers in the frequency domain. Also, an RB may include one or more symbols in the time domain, and may be one slot, one mini-slot, one subframe, or one TTI in length. One TTI and one subframe each may be comprised of one or more resource blocks. Note that one or more RBs may be referred to as a "physical resource block (PRB (Physical RB))", a "subcarrier group (SCG)", a "resource element group (REG)", a "PRB pair", an "RB pair" and so on.

Furthermore, a resource block may be comprised of one or a plurality of resource elements (REs). For example, one RE may be a radio resource region of one subcarrier and one symbol.

Note that the configurations of radio frames, subframes, slots, mini-slots, symbols, and the like described above are merely examples. For example, configurations pertaining to the number of subframes included in a radio frame, the number of slots per a subframe or a radio frame, the number of mini-slots included in a slot, the number of symbols and RBs included in a slot or a mini-slot, the number of subcarriers included in an RB, the number of symbols in a TTI, the symbol duration, the length of cyclic prefixes (CPs), and the like can be variously changed.

Also, the information and parameters described in the present disclosure may be represented in absolute values or in relative values with respect to given values, or may be represented using other applicable information. For example, a radio resource may be specified by a given index.

The names used for parameters and so on in the present disclosure are in no respect limiting. For example, since various channels (PUCCH (Physical Uplink Control Channel), PDCCH (Physical Downlink Control Channel) and so on) and information elements can be identified by any suitable names, the various names assigned to these individual channels and information elements are in no respect limiting.

The information, signals and/or others described in the present disclosure may be represented by using a variety of different technologies. For example, data, instructions, commands, information, signals, bits, symbols, chips, and the like that may be referenced throughout the above description, may be represented by voltages, currents, electromagnetic waves, magnetic fields or particles, optical fields or photons, or any combination of these.

Further, information, signals and the like can be output in at least one of a direction from higher layers to lower layers and a direction from lower layers to higher layers. Information, signals, and the like may be input and output via a plurality of network nodes.

The information, signals and so on that are input and/or output may be stored in a specific location (for example, in a memory), or may be managed in a control table. The information, signals and so on to be input and/or output can be overwritten, updated or appended. The information, signals, and the like that are output may be deleted. The information, signals, and the like, which are input, may be transmitted to other apparatuses.

The reporting of information is by no means limited to the aspects/embodiments described in the present disclosure, and may be performed using other methods. For example, the reporting of information may be implemented by physical layer signaling (for example, downlink control information (DCI), uplink control information (UCI)), higher layer signaling (for example, RRC (Radio Resource Control) signaling, broadcast information (master information block (MIB), system information block (SIB), and the like), and MAC (Medium Access Control) signaling), other signals or combinations of these.

Note that physical layer signaling may be referred to as "L1/L2 (Layer 1/Layer 2) control information (L1/L2 control signals)", "L1 control information (L1 control signal)" and so on. Also, RRC signaling may be referred to as "RRC messages", and can be, for example, an RRC connection setup (RRCConnectionSetup) message, RRC connection reconfiguration (RRCConnectionReconfiguration) message, and so on. Moreover, the MAC signaling may be reported using, for example, MAC control elements (MAC CEs) .

Further, reporting of given information (for example, reporting of information to the effect that "X holds") does not necessarily have to be sent explicitly, and may be sent implicitly (for example, by not reporting this given information, or by reporting another piece of information).

Decisions may be made in values represented by one bit (0 or 1), may be made in Boolean values that represent true or false, or may be made by comparing numerical values (for example, comparison against a given value).

Software, whether referred to as "software", "firmware", "middleware", "microcode" or "hardware description language", or called by other names, should be interpreted broadly, to mean instructions, instruction sets, code, code segments, program codes, programs, subprograms, software modules, applications, software applications, software packages, routines, subroutines, objects, executable files, execution threads, procedures, functions and so on.

Also, software, commands, information and so on may be transmitted and received via communication media. For example, when software is transmitted from a website, a server or other remote sources by using at least one of wired technologies (coaxial cables, optical fiber cables, twisted-pair cables, digital subscriber lines (DSLs), and the like) and wireless technologies (infrared radiation, microwaves, and the like), at least one of these wired technologies and wireless technologies are also included in the definition of communication media.

The terms "system" and "network" as used in the present disclosure are used interchangeably.

In the present disclosure, the terms such as "Base Station (BS)", "radio base station", "fixed station", "NodeB", "eNodeB (eNB)", "gNodeB (gNB)", "access point", "transmission point", "reception point", "transmission/reception point", "cell", "sector", "cell group", "carrier", "component carrier", and "bandwidth part (BWP)" may be used interchangeably. The base station may be called a term such as a macro cell, a small cell, a femto cell, a pico cell, and the like.

A base station can accommodate one or more (for example, three) cells (also referred to as "sectors"). When a base station accommodates a plurality of cells, the entire coverage area of the base station can be partitioned into multiple smaller areas, and each smaller area can provide communication services through base station subsystems (for example, indoor small base stations (RRHs (Remote Radio Heads))). The term "cell" or "sector" refers to all or part of the coverage area of at least one of a base station and a base station subsystem that provides communication services within this coverage.

In the present disclosure, the terms "mobile station (MS)" "user terminal", "user equipment (UE)", "terminal", etc. may be used interchangeably.

A mobile station may be referred to as a subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client, or some other suitable terms.

At least one of the base station and the mobile station may be called a transmitting device, a receiving device, or the like. Note that at least one of a base station and a mobile station may be a device mounted on a moving body, a moving body itself and so on. The moving body may be a transportation (for example, a car, an airplane and so on), an unmanned moving body (for example, a drone, an autonomous car and so on), or a (manned or unmanned) robot. Note that at least one of the base station and the mobile station also includes a device that does not necessarily move during a communication operation.

Furthermore, the radio base stations in the present disclosure may be replaced by user terminals. For example, each aspect/embodiment of the present disclosure may be applied to a configuration in which communication between a radio base station and a user terminal is replaced by communication among a plurality of user terminals (which may be referred to as, for example, D2D (Device-to-Device), V2X (Vehicle-to-Everything) and so on). In this case, the user terminal 20 may have the functions of the radio base station 10 described above. In addition, terms such as "uplink" and "downlink" may be interpreted as a term corresponding to communication between terminals (for example, "side"). For example, an uplink channel may be interpreted as a side channel.

Likewise, the user terminals in the present disclosure may be interpreted as radio base stations. In this case, the radio base stations 10 may have the functions of the user terminals 20 described above.

Certain actions that have been described in the present disclosure to be performed by base stations may, in some cases, be performed by their upper nodes. In a network comprised of one or more network nodes with base stations, it is clear that various operations that are performed so as to communicate with terminals can be performed by base stations, one or more network nodes (for example, MMEs (Mobility Management Entities), S-GWs (Serving-Gateways) and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts and so on that have been used to describe the aspects/embodiments in the present disclosure may be reordered as long as inconsistencies do not arise. For example, although various steps have been described in the present disclosure with various components of steps in exemplary orders, the specific orders that are described in the present disclosure are by no means limiting.

The aspects/embodiments illustrated in the present disclosure may be applied to LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), FRA (Future Radio Access), New-RAT (Radio Access Technology), NR(New Radio), NX (New radio access), FX (Future generation radio access), GSM (registered trademark) (Global System for Mobile communications), CDMA 2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), systems that use other adequate radio communication methods and/or next-generation systems that are enhanced based on these. Further, a plurality of systems may be combined and applied (for example, a combination of LTE or LTE-A and 5G) .

The phrase "based on" as used in the present disclosure does not mean "based only on", unless otherwise specified. In other words, the phrase "based on" means both "based only on" and "based at least on".

Reference to elements with designations such as "first", "second" and so on as used in the present disclosure does not generally limit the number/quantity or order of these elements. These designations are used in the present disclosure only for convenience, as a method for distinguishing between two or more elements. Hence, references of first and second elements do not mean that only two elements are adoptable, or that the first element must precede the second element in some way.

The term "determining" as used in the present disclosure may encompass a wide variety of actions. For example, "determining" may be regarded as "determining" judging, calculating, computing, processing, deriving, investigating, looking up (for example, looking up in a table, database, or another data structure), ascertaining, and the like.

Furthermore, "determining" as used herein may be interpreted to mean making judgements and determinations related to receiving (for example, receiving information), transmitting (for example, transmitting information), inputting, outputting, accessing (for example, accessing data in a memory) and so on.

In addition, "determining" as used herein may be interpreted to mean making judgements and determinations related to resolving, selecting, choosing, establishing, comparing, and so on. In other words, "determining" as used in the present disclosure may be interpreted to mean making judgements and determinations related to some action.

In addition, "determining" as used herein may be interpreted to mean "assuming", "expecting", "considering" and so on.

As used in the present disclosure, the terms "connected" and "coupled", or any variation of these terms, mean all direct or indirect connections or coupling between two or more elements, and may include the presence of one or more intermediate elements between two elements that are "connected" or "coupled" to each other. The coupling or connection between the elements may be physical, logical or a combination of these. For example, "connection" may be replaced by "access".

In the present disclosure, when two elements are connected to each other, these elements can be considered "connected" or "coupled" to each other by using one or more electrical wires, cables, printed electrical connections, and the like, and, as a number of non-limiting and non-inclusive examples, by using electromagnetic energy having wavelengths in a radio frequency domain, a microwave domain, an optical (both visible and invisible) domain, and the like.

In the present disclosure, the phrase "A and B are different" may mean "A and B are different from each other". The terms such as "leave", "coupled" and the like may be interpreted as well.

When the terms such as "include", "including", and variations of these are used in the present disclosure or claims, these terms are intended to be inclusive, in a manner similar to the way the term "comprising" is used. Furthermore, the term "or" as used in this disclosure or in claims is intended to be not an exclusive disjunction.

For example, when articles, such as "a", "an", and "the" in English, are added by translation in the present disclosure, the present disclosure may include that nouns which follow these articles are in plural.

Now, although invention according to the present disclosure has been described above in detail, it is obvious to those skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description in the present disclosure is provided only for the purpose of explaining examples, and should by no means be construed to limit the invention according to the present disclosure in any way.

## Claims

1. A transmitting device comprising:
a transmitting section configured to transmit a signal in a random access procedure; and
a control section configured to control repetitions for a message including one of data using data mapping type B and a HARQ (Hybrid Automatic Repeat reQuest) feedback.

2. The transmitting device according to claim 1, wherein the control section performs at least one of assigning a plurality of the messages to at least each one slot and assigning the message to the same symbol in each of the plurality of slots.

3. The transmitting device according to claim 1 or 2, wherein the control section applies the repetitions to initial transmission of the message.

4. The transmitting device according to claim 3, wherein based on at least one of the number of repetition for the initial transmission of a given message and the number of retransmissions of the given message, the control section determines the number of repetition for retransmission of the message.

5. The transmitting device according to claim 3, wherein the control section determines the number of repetition for the message based on at least one of system information, higher layer signaling, and downlink control information.

6. A receiving device comprising:
a receiving section configured to receive a signal in a random access procedure; and
a control section configured to control reception of repetitions for a message including one of data using data mapping type B and a HARQ (Hybrid Automatic Repeat reQuest) feedback.
